# EUROPEAN PATENT SPECIFICATION

(11) **EP 2 145 686 B1**
(45) Date of publication and mention of the grant of the patent: **23.09.2015**
(21) Application number: 09165546.4
(22) Date of filing: 15.07.2009
(51) Int. Cl.: B02C 19/00, B02C 13/02, B02C 13/26, B02C 13/28

(54) **Bottle crusher**
Flaschenzerkleinerer
Broyeur de bouteilles

(30) Priority: 16.07.2008 BE 200800397
(43) Date of publication of application: 20.01.2010
(73) Proprietor: Pulver BVBA, 9940 Evergem (BE)
(72) Inventor: Boudringhien, Patrick, 8800 Roeselare-Beveren (BE)
(74) Representative: Ostyn, Frans

(56) References cited:
- FR-A- 2 467 632
- US-A- 4 093 126
- US-A- 5 165 610
- US-A- 5 524 837

## Description

This invention concerns an installation for the reduction of glass, including:
- an entrance opening for introducing glass according to a direction of insertion;
- a crushing chamber, comprising a rotatable crusher element installed for crushing the supplied glass;
- a drive engine for the crusher element, equipped with an engine shaft, wherein the crusher element is installed onto the engine shaft and mainly extends transversally onto the direction of insertion.

In order to reduce the glass volume, e.g. bottles, bowls, beakers, ... and, thus, cutting back on transport costs among other things, it is known to crush the glass using a so-called bottle-crusher. In this process, the glass that needs to be broken is inserted into the crushing chamber where it is crushed using the crusher element. The obtained glass fragments are subsequently collected in a receptacle which can be removed from the installation and discharged when full.

The crusher element is driven by an electrical engine, which can be found at the bottom of the crushing chamber. However, the disadvantage of a similar installation is that falling glass fragments can end up in the inner part of the engine. This problem can be solved, as described in the Dutch patent publication NL 1028384, by placing the drive engine sideways next to the crushing chamber. The drive shaft of the crusher element can be found under the crusher element and the engine shaft extends on a parallel with the drive shaft. The engine shaft and the drive shaft are connected using a chain transmission. A similar design, however, implies a complex installation, which results in an expensive construction. In addition, possible repairs can be time-consuming.

Another disadvantage of the installation described in NL 1028384 is that parts of the broken glass remains on the crusher element holder. As a result, the remaining glass fragments risk falling out of the installation after removing the receptacle and, thus, are not collected by the receptacle. This implies it should be removed by hand which largely increases the risk of injury.

In order to resolve the problem mentioned above, it is known from US 5 165 610 and US 4 093 126 that the crusher element should be installed on the engine shaft by which the crusher element mainly extends transversally onto the supply direction.

FR 2 467 632 relates to a glass disposal system having two crusher elements, each in the form of a rectangular metal plate and which are mounted at a distance of each other on an rotatable shaft.

For that purpose, this invention has the goal to provide a glass reduction installation which can be constructed easily and at a reasonable price and in which the crusher element does not wear away too quickly. The installation also needs to efficiently crush glass and carry off the broken glass effectively.

The goal of the invention is attained by providing a glass reduction installation, comprising:
- an entrance opening for introducing glass according to a direction of insertion;
- a crushing chamber, comprising a rotatable crusher element installed for reducing the introduced glass;
- a drive engine for the crusher element, equipped with an engine shaft, wherein the crusher element is installed onto the engine shaft and mainly extends transversally onto the direction of insertion, wherein the crusher element comprises a number of projecting crusher points which are removable installed onto the crusher element, and wherein the crusher element is bar-shaped and consists of two interconnecting crusher element parts.

In an installation constructed in this manner, the engine shaft also is the drive shaft of the crusher element. The main advantage of this installation is a simple construction at an acceptable price. Furthermore, after the crushing process, the supplied material is directly carried off to the receptacle without further obstacles.

The projecting crusher points will mainly realize the breaking of the glass. The presence of these crusher points prevents the crusher element from being too exposed to wear and tear, as was the case in the known installations. In particular, the mentioned crusher points are removably installed onto the crusher element. As a result, the crusher points can be easily replaced when they are worn away after a while as a result of crushing the supplied glass.

The crusher element is composed of two interconnecting crusher element parts. By constructing the crusher element in two parts, it can be replaced a lot faster and easier.

The crusher element comprises a passage for the engine shaft as well.

According to a particular construction design of the installation according to the invention, the installation comprises a valve moving against a spring mechanism, which was installed to seal the entrance opening.

In a more particular design of the installation according to the invention, the installation comprises at least two suspension elements, installed to suspend the crushing chamber and/or the drive engine in a housing. The installation preferably comprises at least four suspension elements, installed to suspend the crushing chamber and/or the drive engine in the housing.

In a most particular design of the installation according to the invention, the crushing chamber has a quadrangular cross-section.

In order to further elucidate the characteristics of this invention and in order to indicate additional advantages and particularities, below you will find a more detailed description of the glass reduction installation according to the invention. It should be clear that none of the description hereinafter can be interpreted as a limitation to the protection claimed for this invention in the claims.

In this description, we refer to the attached figures using reference numbers, in which:
- **figure 1****:** shows a frontal view of the installation according to the invention;
- **figure 2****:** shows a view from above of the installation according to the invention:
- **figure 3****:** represents the crushing chamber and the drive engine;
- **figure 4****:** shows a side view of the representation in figure 3;
- **figure 5****:** shows a representation of the crusher element.

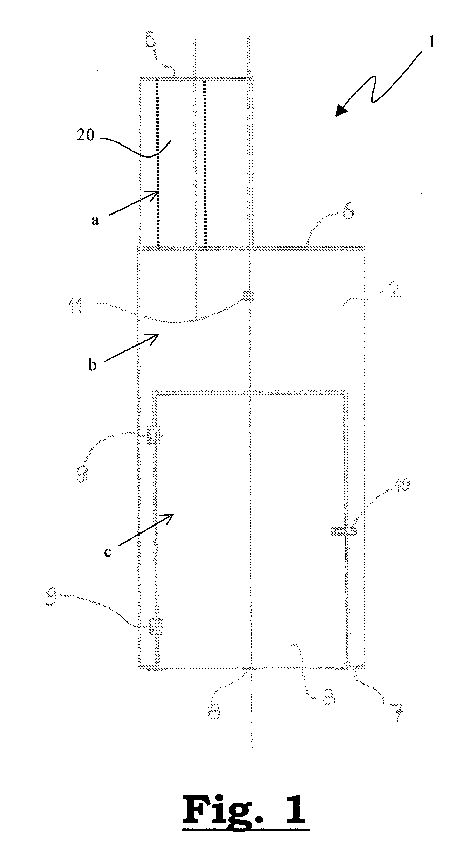

The glass reduction installation (1), for bottles, bowls, etc. comprises, as shown in figure 1, a synthetic housing (2) (preferably in a cylindrical design) in which three elements can be distinguished: a supply section (a) (upper part), a crushing section (b) (middle part) and a receptacle or discharge section (c) (bottom part). The installation also comprises a control panel with a switch (11) to activate and deactivate the installation. Using this control panel, it is also possible to modify the number of revolutions of the engine. The installation can also be equipped with an automatic start system, which activates the installation as soon as glass is inserted.

The supply section (a) comprises a top lid (5) with an entrance opening installed for introducing glass according to an insertion direction. The entrance opening can be sealed using a valve (4) moving against a spring mechanism. Upon inserting glass or a receiver, the valve changes from a closed position to an open position. After inserting the receiver, it returns to a closed position (after about 0.1 sec). The supply section (a) also comprises a conductor tube (20) (useful dimensions 130 x 130 mm) which constitutes the connection between the entrance opening and the crushing section (b). The supply section (a) is firmly connected to an intermediate lid.

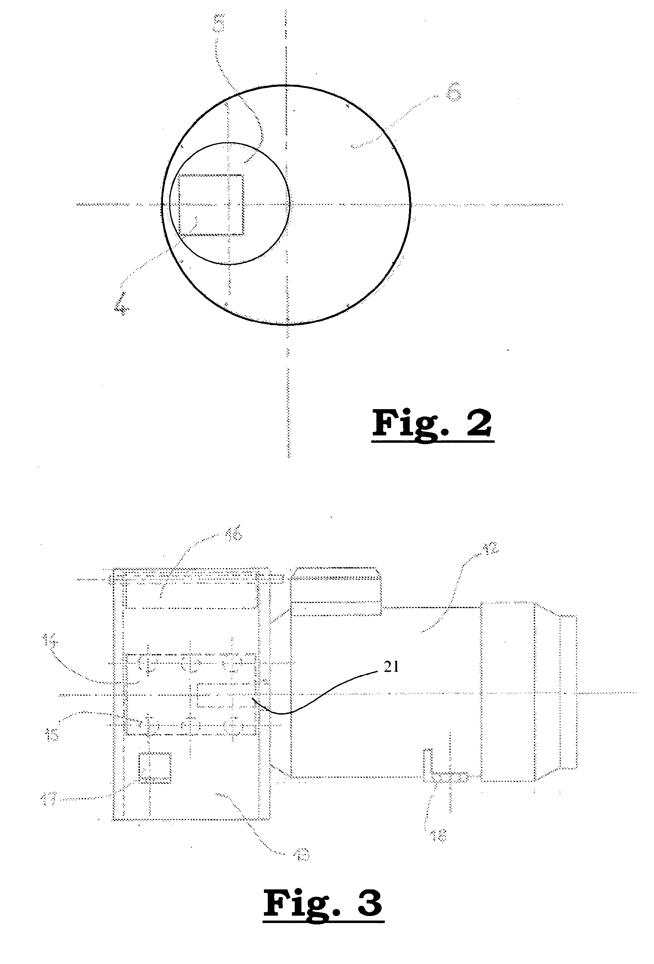

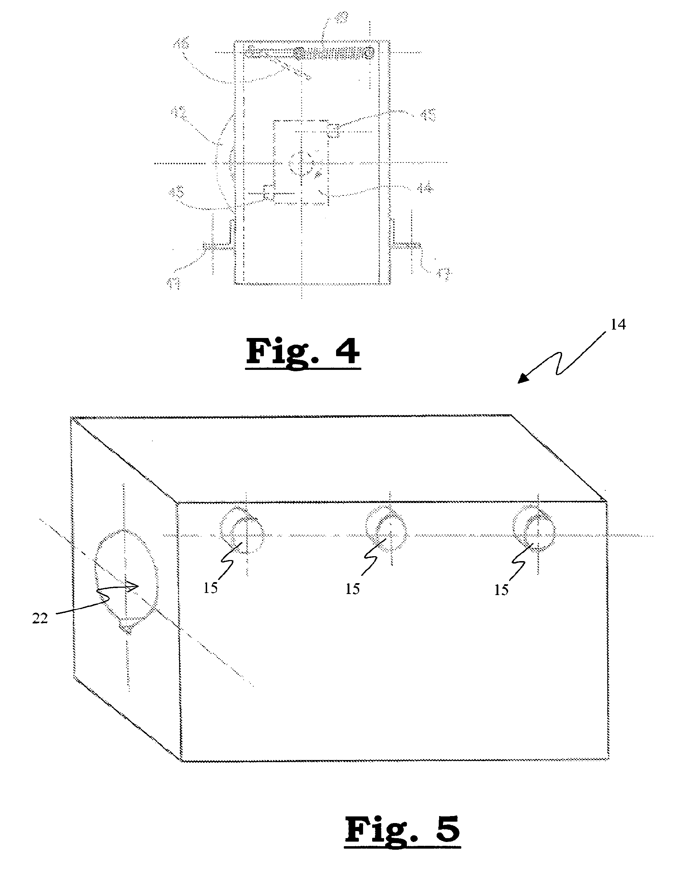

The crushing section (b), represented in figures 3 and 4, consists of a crushing chamber (13), comprising a rotatable crusher element (14) installed for reducing the inserted glass, and a drive engine (12) for the crusher element (14), installed (sideways) next to the crushing chamber (13). The drive engine (12) is preferably driven by electricity and has a capacity of around 1100 W. The drive engine (12) comprises an engine shaft (21) onto which the crusher element (14) is directly installed. To this end, the crusher element (14) comprises a passage (22) for the engine shaft. The engine shaft (20) and therefore also the crusher element (14) mainly extend transversally onto the direction of insertion. The drive engine (12) and the crushing chamber (13) are interconnected using a flange connection. In order to replace the crusher element quickly and easily the crusher element (14) is built up out of two interconnecting crusher element parts.

The crushing chamber (13) is composed of a quadrangular, preferably square, housing of metal plates. The crushing chamber (13) has a useful passage of 130 x 130 mm to which the conductor tube is connected (20). This passage can be sealed by a one-way valve (16). Normally, the one-way valve (16) is in a closed position, but easily allows inserted glass to pass, after which it returns to a closed position using a spring mechanism (19). In order to damp the sound during the crushing process, the crushing chamber (13) is coated with an insulating synthetic material.

The crushing chamber (13) as well as the drive engine (12) hold fixing elements (17,18) installed for suspending the crushing chamber (13) and the drive engine (12) from points of suspension - preferably from square profiles attached to the inside of the housing (2). The loose ends of these square profiles are equipped with a damper to damp vibrations from the crushing chamber (13) and the drive engine, during operation.

The crushing chamber is also equipped with a sloping plate to guide the glass broken by the rotatable crusher element (14) in the direction of the receptacle.

The rotary crusher element (14) (see fig. 5 e.g.) is preferably bar-shaped and is mounted directly onto the engine shaft, which leads to the crushing chamber (13) and extends particularly across almost the entire width of the crushing chamber (13). Contrary to the known glass reduction installations, this system does not have a transmission section, yet attains the same amount of revolutions/minute (rpm) as the engine. The engine preferably runs at 1500 revolutions/minute.

The crusher element (14) is preferably constructed in half-hard steel and comprises a number of projecting crusher points (15), where it comes into contact with the glass that needs to be crushed. These crusher points are preferably detachable and constructed in hard steel (e.g. quality 12.9). For example, hard steel screws (15 DIN 912) can be used as crusher points. As most of the wear and tear during the glass reduction process will appear on the crusher points (screws), it is easy to almost entirely renew the crusher element by simply replacing the screws.

In order to manage the size of the glass fragments, which varies between 2 and 8 cm, on the one hand, we can modify the engine's number of revolutions. On the other hand, we can also move the crusher element (14) away from the centre of the crushing chamber (13) in order to change the distance between the crusher element and the side of the crushing chamber (crushing chamber wall). It has been proven by experiment that the further the crusher element is placed from the centre, the larger the glass fragments and the closer to the centre the crusher element is placed in the crushing chamber, the smaller the glass fragments.

The receptacle or discharge section (c) can be found at the bottom of the installation (1) and comprises a space for the broken glass receptacle (not shown in the figures) to be placed. The receptacle collects fragments of around 200 glass bottles bowls and can be sealed hermetically. The mentioned space can be sealed using a door (3) which is attached to the housing (2) using hinges (9) for example. The mentioned door (3) can be locked using a bolt. The installation can also be equipped with a detection mechanism which detects when the receptacle is full and subsequently generates an alarm signal.

The receptacle or discharge section (c) is equipped with a floor panel at the bottom (7) which comprises a number of facilities (8), for example, unscrewable points of support, allows placing the installation (1) on uneven terrain.

## Claims

1. Glass reduction installation (1), comprising:
- an entrance opening for introducing glass according to a direction of insertion;
- a crushing chamber (13), comprising a rotatable crusher element (14) installed for crushing the supplied glass;
- a drive engine (12) for the crusher element (14), equipped with an engine shaft (21), wherein the crusher element (14) is installed onto the engine shaft (21) and mainly extends transversally onto the direction of insertion, **characterized in that** the crusher element (14) comprises a number of projecting crusher points (15) which are removable installed onto the crusher element (14), and **in that** the crusher element (14) is bar-shaped and consists of two interconnecting crusher element parts.

2. Installation (1) according to any one of the previous claims, **characterized in that** the crusher element (14) comprises a passage (22) for the engine shaft (21).

3. Installation (1) according to any one of the previous claims, **characterized in that** the installation (1) comprises a valve moving against a spring mechanism, installed to seal the entrance opening.

4. Installation (1) according to any one of the previous claims, **characterized in that** the installation (1) comprises at least two suspension elements (17,18), installed for suspending the crushing chamber (13) and/or the drive engine (12) in a housing (2).

5. Installation (1) according to any one of the previous claims, **characterized in that** the crushing chamber (13) has a quadrangular cross-section.

## Patentansprüche

1. Glaszerkleinerungseinrichtung (1), umfassend:
- eine Eintrittsöffnung zum Einführen von Glas gemäß einer Einführrichtung;
- eine Brechkammer (13), die ein drehbares Brecherelement (14) umfasst, das zum Brechen des zugeführten Glases eingerichtet ist;
- einen Antriebsmotor (12) für das Brecherelement (14), der mit einer Motorwelle (21) ausgestattet ist, wobei das Brecherelement (14) auf der Motorwelle (21) eingerichtet ist und hauptsächlich quer zur Einführungsrichtung verläuft, **dadurch gekennzeichnet, dass** das Brecherelement (14) eine Anzahl vorstehender Brecherpunkte (15) umfasst, die abnehmbar am Brecherelement (14) eingerichtet sind, und dass das Brecherelement (14) stangenförmig ist und aus zwei miteinander verbundenen Brecherelementteilen besteht.

2. Einrichtung (1) nach einem der vorstehenden Ansprüche, **dadurch gekennzeichnet, dass** das Brecherelement (14) einen Durchgang (22) für die Motorwelle (21) umfasst.

3. Einrichtung (1) nach einem der vorhergehenden Ansprüche, **dadurch gekennzeichnet, dass** die Einrichtung (1) ein Ventil umfasst, das sich gegen einen Federmechanismus bewegt und zum Skalieren der Eintrittsöffnung eingerichtet ist.

4. Einrichtung (1) nach einem der vorhergehenden Ansprüche, **dadurch gekennzeichnet, dass** die Einrichtung (1) zumindest zwei Aufhängeelemente (17, 18) umfasst, die zum Aufhängen der Brechkammer (13) und/oder des Antriebsmotors (12) in einem Gehäuse (2) eingerichtet sind.

5. Einrichtung (1) nach einem der vorhergehenden Ansprüche, **dadurch gekennzeichnet, dass** die Brechkammer (13) einen viereckigen Querschnitt aufweist.

## Revendications

1. Installation de réduction de verre (1), comprenant :
- une ouverture d'entrée pour introduire du verre selon un sens d'insertion ;
- une chambre de broyage (13), comprenant un élément formant broyeur rotatif (14) installé pour broyer le verre fourni ;
- un moteur d'entraînement (12) pour l'élément formant broyeur (14), équipé d'un arbre de moteur (21), dans lequel l'élément formant broyeur (14) est installé sur l'arbre de moteur (21) et s'étend principalement de manière transversale sur le sens d'insertion, **caractérisée en ce que** l'élément formant broyeur (14) comprend un certain nombre de points broyeurs en saillie (15) qui sont installés de façon amovible sur l'élément formant broyeur (14), et **en ce que** l'élément formant broyeur (14) est en forme de barre et consiste en deux parties d'élément formant broyeur s'interconnectant.

2. Installation (1) selon l'une quelconque des revendications précédentes, **caractérisée en ce que** l'élément formant broyeur (14) comprend un passage (22) pour l'arbre de moteur (21).

3. Installation (1) selon l'une quelconque des revendications précédentes, **caractérisée en ce que** l'installation (1) comprend une valve mobile contre un mécanisme de ressort, installé pour sceller l'ouverture d'entrée.

4. Installation (1) selon l'une quelconque des revendications précédentes, **caractérisée en ce que** l'installation (1) comprend au moins deux éléments de suspension (17, 18), installés pour suspendre la chambre de broyage (13) et/ou le moteur d'entraînement (12) dans un logement (2).

5. Installation (1) selon l'une quelconque des revendications précédentes, **caractérisée en ce que** la chambre de broyage (13) a une section transversale quadrangulaire.
